# EUROPÄISCHE PATENTSCHRIFT

(11) **EP 0 663 277 B1**
(45) Veröffentlichungstag und Bekanntmachung des Hinweises auf die Patenterteilung: **23.12.1998**
(21) Anmeldenummer: 95100432.4
(22) Anmeldetag: 13.01.1995
(51) Int. Cl.: B29C 47/64, B01F 5/06

(54) **Extrudierschweissgerät zum Verschweissen von thermoplastischen Kunststoffmaterialien**
Apparatus for extrusion-welding thermoplastic materials
Appareil de soudage par extrusion pour matières thermoplastiques

(30) Priorität: 13.01.1994 DE 4400778
(43) Veröffentlichungstag der Anmeldung: 19.07.1995
(73) Patentinhaber: Munsch Kunststoff-Schweisstechnik GmbH, D-56235 Ransbach-Baumbach (DE)
(72) Erfinder: Klein, Peter, D-56412 Heiligenroth (DE); Daubach, Rüdiger, D-56412 Hübingen (DE); Lenners, Martin, D-56203 Höhr-Grenzhausen (DE)
(74) Vertreter: Goddar, Heinz J., Dr.

(56) Entgegenhaltungen:
- CH-A- 426 734
- FR-A- 1 080 258
- FR-A- 2 647 212
- US-A- 7 411 623
- DATABASE WPI Section Ch, Week 8126 Derwent Publications Ltd., London, GB; Class A32, AN 81-47424D & SU-A-770 824 (POLYMER CONS MATERI)

## Beschreibung

Die Erfindung betrifft ein Extruderschweißgerät zum Verschweißen von thermoplastischen Kunststoffmaterialien, mit einer Extruderschnecke, einer Einrichtung zum Schmelzen des Kunststoffmaterials und einer Extruderdüse, wobei ein Verdrängerkörper in Förderrichtung hinter der Extruderschnecke vorgesehen ist, der einen Durchlaß mit sich in Förderrichtung verringerndem Querschnitt zur Kompression des durch ihn geförderten Materials definiert wird.

Bisher wurden Extruderschweißgeräte zum Verschweißen von thermoplastischen Kunststoffmaterialien mit Kompressionsschnecken ausgerüstet, wie sie beispielsweise der DE 15 79 001 A1 zu entnehmen sind. Hierbei wird durch die abnehmende Gangtiefe der Extruderschnecke, welche das zu plastifizierende Kunststoffmaterial transportiert, dieses im vorderen Bereich der Extruderschnecke erheblich höher komprimiert als im hinteren Bereich. Dies hat den Nachteil, daß im vorderen Bereich der Extruderschnecke auch bereits plastifiziertes Kunststoffmaterial über die Gänge der Extruderschnecke unter hohem Kraftaufwand gequetscht wird. Dabei wird sich dieses Material auch im Kreis um die Schnecke herumbewegen, und diese Kreisbewegung des zähflüssigen Materials verstärkt sich noch, je stärker die Kompression der Extruderschnecke ist.

Da das Material an dieser Stelle der Extruderschnecke bereits weitestgehend plastifiziert vorliegt, ist diese Bewegung als unnötige mechanische Belastung des Materials zu sehen, die die späteren Materialeigenschaften des Kunststoffes verschlechtert. Bei einer Fließbewegung praktisch in einer spiralförmigen Röhre um den Kern der Schnecke herum muß das Material hier erhebliche Verformungen und Streckungen erleiden. Weiter stellt sich dadurch eine lokal unterschiedliche Temperatur des Kunststoffmaterials ein.

Aus der US-A 4 711 623, die zur Bildung des Oberbegriffes des Anspruches 1 verwendet wurde, ist es bekannt, stromabwärts hinter einer Extruderschnecke eine Kompressionsvorrichtung anzuordnen, an der eine Verdichtung des zu plastifizierenden Materials stattfindet.

Es verbleibt das Problem, die mechanische und thermische Belastung des Kunststoffmaterials zu minimieren und für eine bessere Homogenisierung bei genauerer Temperatureinhaltung zu sorgen.

Diese Aufgabe wird durch ein Extruderschweißgerät nach Anspruch 1 gelöst.

Erfindungsgemäß ist die Extruderschnecke eine zylinderförmige Schnecke. Eine solche Schnecke transportiert in erster Linie nur, komprimiert aber nicht aktiv, so daß die mit komprimierenden Extruderschnecken verbundenen Nachteile des Standes der Technik vermieden werden.

Der Verdichtung durch den Verdrängerkörper erfolgt eine Expansion in der nachgeschalteten Expansionskammer, die in einer vorteilhaften Ausführung ringförmig gestaltet ist Sie wird weiter vorteilhaft durch eine Lochblende abgeschlossen, durch die das Material in eine Vielzahl von Strängen gezwungen wird, was zu einer zusätzlichen Homogenisierung des Materials führt.

Vorteilhaft bei der angegebenen Anordnung ist auch, daß in der Expansionskammer nun mittels eines Temperaturfühlers, der bis in ihre Mitte hineinragt, die Temperatur des Kunststoffmaterials in dessen Volumen gemessen werden kann. Bisher war dies nur an den Randflächen des Extruderschweißgerätes möglich. Es konnte, wie beispielsweise in der DE-OS 21 21 305 offenbart, ein Temperatursensor nämlich nicht in den Mittenbereich des durch die Extruderschnecke transportierten Materials eingebracht werden, weil dieser mit der rotierenden Schnecke kollidieren würde.

Durch die erfindungsgemäß räumliche Trennung der Kompressionsstrecke vom Ort der Temperaturmessung wird weiter erreicht, daß sich die Temperaturverteilung vergleichmäßigt hat, wenn gemessen wird.

Durch das Passieren der Lochblende zur Homogenisierung und das Verweilen und/oder Vermischen der Stränge in einer Endkammer vor der eigentlichen Extruderdüse kann zudem noch eine längere Distanz zur gegebenenfalls gewünschten Regulierung der Temperatur nach deren Messung bereitgestellt werden.

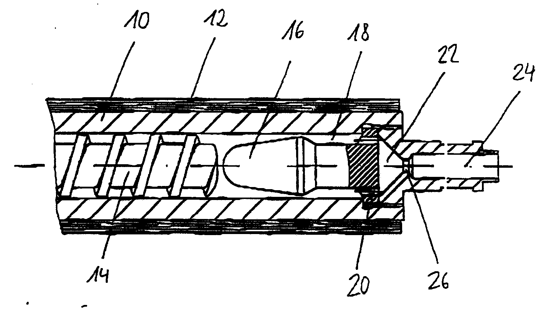

Weitere Merkmale und Vorteile der Erfindung ergeben sich aus nachfolgender Beschreibung eines bevorzugten Ausführungsbeispiels im Zusammenhang mit der beigefügten Zeichnung, in der die einzige Figur eine teilweise weggebrochene Schnittansicht eines Extruderschweißgerätes der Erfindung darstellt.

Bei einem Extruderschweißgerät zum Verschweißen von thermoplastischen Kunststoffmaterialien ist eine Extruderschnecke 14 in einem im wesentlichen zylindrischen Gehäuse 10 untergebracht, das von seiner Außenseite her mittels einer Heizung 12 beheizt wird. Die Extruderschnecke 14 ist bei der gezeigten Ausführungsform zylindrisch ausgebildet, so daß das zu plastifizierende Material in Richtung auf einen Verdrängerkörper 16 transportiert wird, von der Extruderschnecke selbst jedoch nicht komprimiert wird. Die Kompressionsdüse 16 definiert einen Düsenraum, dessen Querschnitt senkrecht zur Förderrichtung sich in Förederrichtung stetig verringert. Dabei kann der Verdrängerkörper 16, wie in der Zeichnung dargestellt, in etwa kegelig ausgebildet sein, aber auch andere Formen, wie Kugeln, Pyramiden und dergleichen sind möglich, solange nur dafür Sorge getragen wird, daß das von der Extruderschnecke geförderte Material in dem zwischen Gehäuse 10 und Verdrängerkörper 16 gebildeten Düsenraum komprimiert wird. Hinter der Düsenöffnung befindet sich einen als Ringkammer ausgebildete Expansionskammer 18 mit einem gegenüber der Düsenöffnung vergrößerten Querschnitt, in der eine Entspannung des Materials stattfindet. Da in dieser nachgeschalteten Expansionskammer 18 der thermoplastische Kunststoff wieder expandieren kann, ist die mechanische Belastung auf das plastifizierte Kunststoffmaterial beim Verdichten nur kurzfristig.

In der Expansionskammer 18 ist ein Temperaturfühler (nicht dargestellt) vorgesehen, der mit seiner Meßspitze mitten in die Schmelze hineinragt. Hier kann in einer vergleichsweise homogenen Temperaturverteilung bei entlastetem Kunststoff dessen Temperatur sehr genau erfaßt werden. Zudem ist der notwendige Aufwand zum Anbringen und Abstützen des Temperaturfühlers gegen den auf ihm lastenden Strömungsdruck verringert. Die Expansionskammer 18 wird von einer Lochblende 20 abgeschlossen, die eine Vielzahl von Öffnungen, beispielsweise acht, aufweist, durch die das Kunststoffmaterial hindurchtritt und dabei zu Strängen geformt wird, was zu einer weiteren Homogenisierung des Materials führt. Das Material gelangt dann in eine Endkammer 22 und wird aus dieser durch eine Verengung 26 in die Extruderdüse 24 getrieben, wobei die Verengung 26 den gleichmäßigen Austritt in die Extruderdüse 24 gewährleistet.

Bei einer anderen möglichen Ausführungsform kann die Endkammer zumindest in ihrem Austrittsbereich bereits an die äußere geometrische Form, die der Kunststoffstrang nach dem Passieren der Extruderdüse annehmen soll, angepaßt sein, im Querschnitt also beispielsweise vierkantig oder kreisförmig sein.

## Patentansprüche

1. Extruderschweißgerät zum Verschweißen von thermoplastischen Kunststoffmaterialien, mit einer Extruderschnecke (14), einer Einrichtung (12) zum Schmelzen des Kunststoffmaterials und einer Extruderdüse (24), wobei ein Verdrängerkörper (16) in Förderrichtung hinter der Extruderschnecke (14) vorgesehen ist, der einen Durchlaß mit sich in Förderrichtung verringerndem Querschnitt zur Kompression des durch ihn geförderten Materials definiert,
dadurch gekennzeichnet, daß die Extruderschnecke (14) eine zylinderförmige Schnecke ist.

2. Extruderschweißgerät nach Anspruch 1, dadurch gekennzeichnet, daß dem Verdrängerkörper (16) eine Expansionskammer (18) nachgeschaltet ist.

3. Extruderschweißgerät nach Anspruch 1 oder 2, gekennzeichnet durch einen Temperaturfühler, der mit seiner Meßspitze in die Mitte der Expansionskammer (18) ragt.

4. Extruderschweißgerät nach einem der Ansprüche 1 bis 3, dadurch gekennzeichnet, daß die Expansionskammer (18) durch eine Lochblende (20) abgeschlossen ist, der eine Endkammer (22) nachgeschaltet ist, wobei die Endkammer (22) zumindest in ihrem Austrittsbereich entsprechend der zu erzielenden geometrischen Form des Schmelzgutstranges in die Extruderdüse (24) angepaßt ist.

5. Extruderschweißgerät nach einem der Ansprüche 1 bis 4, dadurch gekennzeichnet, daß die Expansionskammer (18) ringförmig ausgestaltet ist.

## Claims

1. Apparatus for extrusion-welding of thermoplastic materials, comprising an extruder screw (14), a means (12) for melting the plastic material, and an extruder nozzle (24), a torpedo (16) being provided after the extruder screw (14) in the direction of delivery, said torpedo (16) defining a passage having a cross-section which decreases in the direction of delivery in order to compress the material delivered through it,
characterised in that the extruder screw (14) is a cylindrical screw.

2. An extrusion-welding apparatus according to claim 1, characterised in that an expansion chamber (18) is disposed downstream of the torpedo (16).

3. An extrusion-welding apparatus according to claim 1 or 2, characterised by a temperature sensor, the measuring point of which projects into the centre of the expansion chamber (18).

4. An extrusion-welding apparatus according to any one of claims 1 to 3, characterised in that the expansion chamber (18) is closed off by a perforated plate (20), downstream of which is disposed an end chamber (22), at least the outlet zone of the end chamber (22) being adapted to correspond to the required geometric shape of the string of molten material entering the extruder nozzle (24).

5. An extrusion-welding apparatus according to any one of claims 1 to 4, characterised in that the expansion chamber (18) is of an annular shape.

## Revendications

1. Appareil de soudage par extrusion pour le soudage de matières thermoplastiques, comportant une vis d'extrusion (14), un système (12) de fusion de la matière plastique et une fière d'extrusion (24), un corps volumétrique (16) étant prévu dans le sens du refoulement derrière la vis d'extrusion (14), ledit corps définissant un passage à section rétrécie dans le sens du refoulement pour comprimer la matière qui y est refoulée,
caractérisé en ce que la vis d'extrusion (14) est une vis cylindrique.

2. Appareil de soudage par extrusion conforme à la revendication 1, caractérisé en ce qu'au corps volumétrique (16) fait suite une chambre d'expansion (18).

3. Appareil de soudage par extrusion conforme à l'une des revendications 1 ou 2, caractérisé par un capteur de température dont la touche de mesure fait saillie au milieu de la chambre d'expansion (18).

4. Appareil de soudage par extrusion conforme à l'une des revendications 1 à 3, caractérisé en ce que la chambre d'expansion (18) est fermée par un obturateur (20) auquel fait suite un col lecteur (22) adapté à la filière d'extrusion (24) au moins par sa zone de sortie en fonction de la forme géométrique souhaitée pour le cordon de matière fondue.

5. Appareil de soudage par extrusion conforme à l'une des revendications 1 à 4, caractérisé en ce que la chambre d'expansion (18) a une forme annulaire.
